# FASCICULE DE BREVET EUROPEEN

(11) **EP 1 380 198 B1**
(45) Date de publication et mention de la délivrance du brevet: **19.03.2008**
(21) Numéro de dépôt: 03291673.6
(22) Date de dépôt: 04.07.2003
(51) Int. Cl.: A01B 29/04, A01B 29/06

(54) **Machine agricole comportant un bâti support tracté et un rouleau pourvu d'une série de pneumatiques à profil en dôme**
Landwirtschaftliche Maschine mit gezogenem Gestell und Domreifenwalzen
Draft frame agricultural machine with dome shaped tire roller

(30) Priorité: 08.07.2002 FR 0208557
(43) Date de publication de la demande: 14.01.2004
(73) Titulaire: OTICO, 77650 Longueville (FR)
(72) Inventeur: Phely, Olivier, 77520 Thenisy (FR); Piou, Denis, 89340 Villeblevin (FR)
(74) Mandataire: Bezault, Jean

(56) Documents cités:
- EP-A- 0 377 885
- CH-A- 267 060
- DE-A- 19 919 745
- DE-U- 9 114 463
- FR-A- 2 784 331

## Description

L'invention concerne une machine agricole comportant un ou plusieurs rouleaux munis d'une série de pneumatiques enfilés sur un tube horizontal, ces pneumatiques présentant un profil en dôme permettant de créer dans la terre des sillons pour y semer des graines ou repiquer des plants.

Un tel rouleau est par exemple divulgué par le FR-A-2 763 779 au nom de la demanderesse, qui décrit en détail les pneumatiques utilisables à cet effet, qui sont des pneumatiques du type semi-creux, non gonflés, présentant une section telle que la partie de roulement, à profil en dôme, ne s'affaisse pas trop sous l'effort tout en possédant une souplesse suffisante pour lui permettre de subir des déformations.

Ce type de rouleau agricole est utilisable en particulier avec un semoir, pour former dans la terre des sillons destinés à recevoir des graines ou semences. Ces rouleaux peuvent être également utilisés pour rappuyer le sol après semis. Ils peuvent être utilisés seuls ou en combinaison, non seulement avec un semoir mais avec d'autres outils, par exemple de préparation du sol.

Jusqu'à présent, ces rouleaux ont été conçus uniquement pour travailler en champ. Pour le déplacement de la machine sur route, le rouleau doit être porté pour que ses pneumatiques ne roulent pas sur la route, ce qui provoquerait une usure rapide. À cet effet le rouleau, ou la machine qui le comporte, est équipé de roues porteuses escamotables entre une position de travail, où le rouleau repose librement sur le sol, et une position de route, où le rouleau est supporté au-dessus du niveau du sol.

L'invention vise essentiellement à proposer une machine agricole semi-portée, dont le rouleau équipé de ses pneumatiques puisse à la fois travailler en champ, pour créer des sillons dans le sol, et rouler sur route sans qu'il soit nécessaire de le relever, et donc en faisant l'économie des roues porteuses escamotables ou systèmes analogues ainsi que des moyens de commande de ces roues porteuses (actionneur, verrou, etc.).

L'invention propose à cet effet une machine agricole du type décrit par le FR-A-2 763 279 précité, c'est-à-dire comportant un rouleau et un bâti support tracté, ce rouleau comportant au moins un tube monté à rotation autour d'un axe horizontal sur des paliers reliés au bâti support, le tube étant pourvu d'une série de pneumatiques enfilés sur ce tube et présentant des profils circonférentiels respectifs en dôme aptes à former dans la terre une série de sillons parallèles.

Selon l'invention, la machine comprend des moyens de freinage aptes à exercer de manière commandée un couple résistant entre le bâti support et le tube central. Ces moyens de freinage sont avantageusement logés à l'intérieur du tube.

De préférence, le tube est fermé à chacune de ses extrémités par des flasques démontables aptes à exercer un maintien et un serrage axial de la série de pneumatiques enfilés sur le tube, et chaque flasque d'extrémité est solidaire du tube, ce flasque et le pneumatique qui lui est attenant comportant des moyens d'immobilisation en rotation relative.

Dans une forme de réalisation avantageuse, le rouleau comporte deux tubes coaxiaux horizontaux, montés chacun à rotation indépendamment de l'autre, et en ce que chaque tube est pourvu de moyens de freinage propres.

Ces deux tubes peuvent notamment être montés sur un bâti support commun par l'intermédiaire de moyens articulés aptes à autoriser un désalignement des deux tubes par débattement angulaire entre le bâti et l'axe de chaque tube ; des moyens de blocage des moyens articulés peuvent être prévus pour immobiliser de manière commandée les deux tubes dans une position d'alignement de leurs axes.

Un rouleau auxiliaire, également pourvu de pneumatiques, peut être disposé en avant ou en arrière dudit rouleau par rapport à la direction de traction de la machine, et centralement par rapport au bâti dans la région de l'intervalle entre les deux tubes.

Le tube peut avantageusement porter des anneaux intercalaires enfilés sur le tube entre les pneumatiques, ces anneaux étant des anneaux amovibles définissant un intervalle donné séparant axialement les pneumatiques entre eux.

De préférence, chaque pneumatique comporte une bande de roulement circonférentielle en forme de dôme aplati, notamment une bande de roulement est reliée au corps du pneumatique par des épaulements latéraux formant témoins d'usure ; le matériau de la bande de roulement et le matériau du corps du pneumatique peuvent être des matériaux présentant des propriétés mécaniques différentes.

Dans la description qui suit faite seulement à titre d'exemple, on se réfère aux dessins annexés sur lesquels :
- la figure 1 est une vue en coupe d'un rouleau mettant en oeuvre les enseignements de l'invention, selon une première forme de réalisation,
- la figure 2 est une vue de détail, en coupe, montrant la section de l'un des pneumatiques équipant le rouleau de la figure 1,
- la figure 3 est une vue de détail en coupe montrant deux pneumatiques comparables à celui de la figure 2, séparés par un élément annulaire d'espacement,
- la figure 4 est une vue analogue à la figure 3, pour une variante de réalisation de l'élément annulaire,
- la figure 5 est une vue analogue à celle de la figure 1, pour une seconde forme de réalisation de l'invention,
- la figure 6 est une vue analogue à celle de la figure 5, pour une variante articulée du second mode de réalisation, illustré en configuration de travail en champ,
- la figure 7 est une vue analogue à la figure 6, pour une configuration de déplacement sur route.

Sur ces figures, les mêmes références numériques désignent toujours des éléments semblables d'une figure à l'autre.

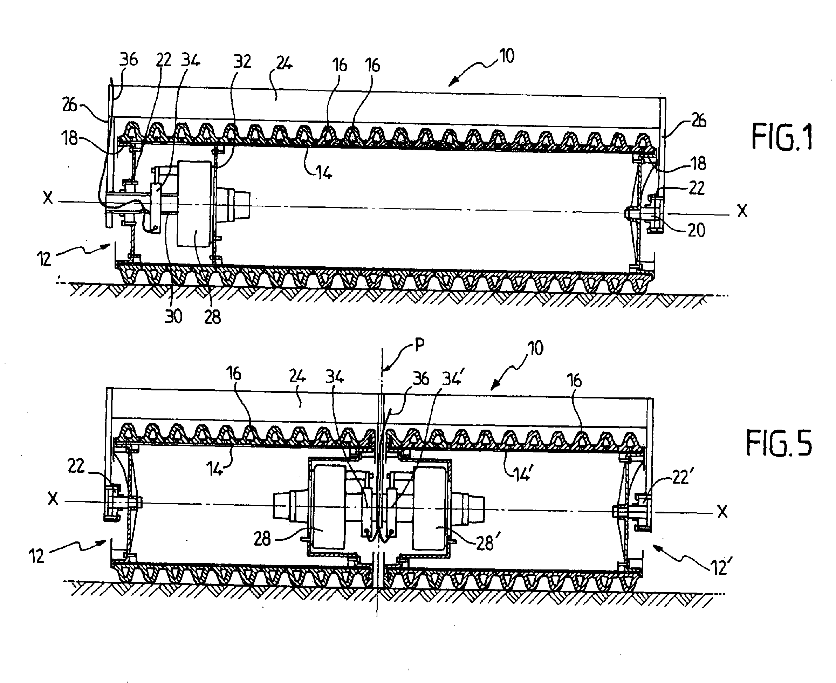

On se référera tout d'abord à la figure 1, qui représente un élément de machine agricole 10 comportant un rouleau 12, par exemple un rouleau pour semoir, comprenant un tube central 14 monté à rotation autour d'un axe horizontal XX et sur lequel sont enfilés une série de pneumatiques identiques 16. Ces pneumatiques sont empilés de façon jointive les uns contre les autres et maintenus entre deux flasques d'extrémité 18 assurant le maintien et le serrage de la série de pneumatiques.

Les flasques 18 sont démontables pour pouvoir monter ou remplacer les pneus. Ils sont en outre munis d'ergots (non représentés) aptes à s'engager dans des évidements appropriés des pneus d'extrémité afin de bloquer en rotation les pneus 16 par rapport au tube 14 (on verra plus bas l'importance de cette caractéristique pour que le rouleau puisse être utilisé sur route).

Le tube 14 est monté en rotation autour d'arbres d'extrémité 20 par l'intermédiaire de paliers 22. Les arbres d'extrémité 20 sont solidaires d'un bâti support 24 de la machine agricole, auquel ils sont reliés par des montants verticaux 26. Le bâti support 24 est relié aux autres éléments de la machine agricole (semoir, timon, etc.) et il est tracté dans une direction perpendiculaire au plan de la figure.

Le déplacement du bâti support entraîne, par réaction des pneumatiques sur le sol, la rotation du rouleau mené 12 de sorte que les pneus, grâce à leur profil en dôme, créent dans le sol des sillons parallèles entre eux, sillons dans lesquels pourront par exemple être semées des graines.

De façon caractéristique de l'invention, le rouleau que l'on vient de présenter, qui est d'un type en lui-même connu, est adapté pour pouvoir non seulement travailler en champ, mais également rouler sur route, les pneumatiques restant en contact avec la chaussée.

A cet effet, le rouleau comporte en particulier un frein, par exemple, comme illustré, un frein 28 à tambour ou à disque, logé à l'intérieur du tube 14.

Ce frein 28 comporte deux organes mobiles en rotation relative entre lesquels peut être appliqué un couple résistant. L'un des organes est lié en rotation à l'arbre d'extrémité 20, par exemple en prolongeant celui-ci vers l'intérieur en 30 jusqu'au boîtier du frein 28. L'autre organe est lié en rotation au tube 14, par exemple il est solidaire d'une cloison 32 interne du tube 14. Le couple de freinage est appliqué au moyen d'un actionneur 34 de type connu, hydraulique ou mécanique, commandé par une conduite hydraulique ou un câble 36 relié au système de freinage du tracteur.

La commande de l'actionneur 34 va ainsi provoquer le freinage du rouleau 12, autorisant de la sorte une conduite sur route sans danger, même pour une machine de masse importante.

Comme on l'a indiqué plus haut, il est prévu entre les flasques d'extrémité 18 et les pneumatiques un moyen de blocage en rotation. De cette manière, l'empilement de pneumatiques 16, le tube 14 et les flasques 18 forment un ensemble solidaire et, même en cas de freinage brutal, l'effort de freinage sera intégralement transmis aux pneumatiques sans risque de glissement entre le tube et les pneumatiques.

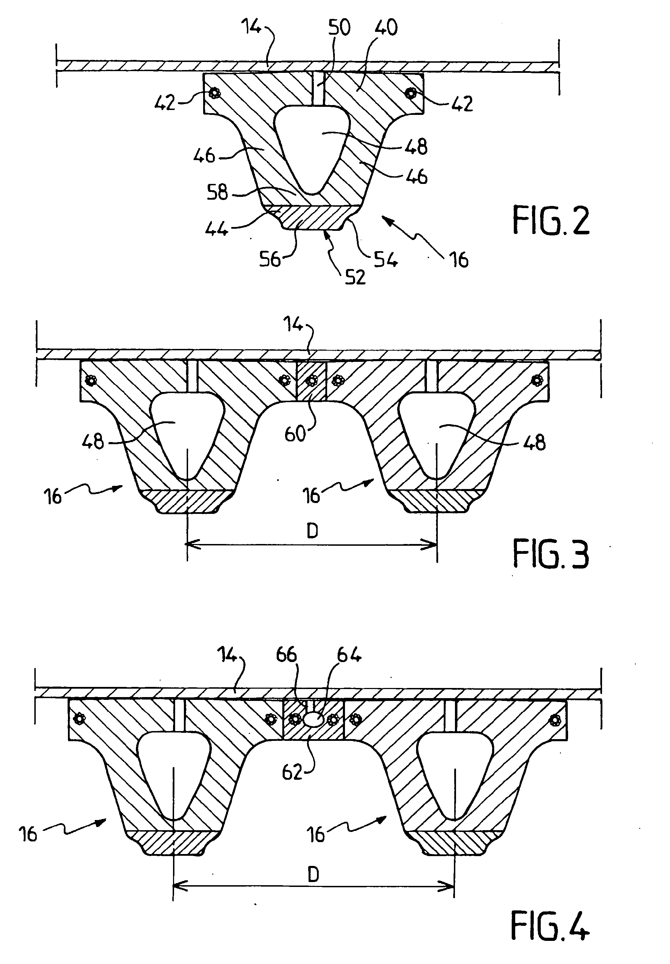

On a illustré plus en détail sur la figure 2 la structure d'un pneumatique particulièrement approprié à un usage mixte en champ et sur route.

Ce pneumatique est du type décrit en détail dans le FR-A-2 76 279 précité, c'est-à-dire qu'il comporte une partie formant fourreau 40 venant en appui contre la face extérieure du tube 14. Cette partie 40 du pneumatique peut être mécaniquement renforcée par un câble torsadé ou un jonc métallique 42 noyé dans la matière du pneu, assurant en particulier un meilleur maintien en appui contre le tube 14 en dépit des sollicitations mécaniques reçues par le pneumatique, qui peuvent être assez intenses et brutales sur route.

La partie opposée du pneumatique, destinée à venir en contact avec le sol à travailler ou avec la chaussée de la route, est une partie formant bande de roulement 44 reliée à la partie formant fourreau 40 par deux flancs opposés 46, 46. Ces flancs 46,46 forment entre eux un angle aigu, de préférence de l'ordre de 15°, et définissent à l'intérieur du pneumatique un espace annulaire creux 48 de section transversale réduite par rapport à la section transversale du profil d'ensemble en dôme du pneumatique. Cet espace annulaire creux 48 n'est pas gonflé et il peut communiquer avec le milieu ambiant par l'intermédiaire d'un orifice tel que 50 traversant l'épaisseur du fourreau 40. L'orifice 50, outre l'équilibrage des pressions en utilisation, sert lors de la fabrication du pneu à l'injection d'air sous pression lors de l'étape de vulcanisation.

Du fait de la forme en dôme et de la présence de l'espace annulaire creux 48 de section transversale réduite, la bande de roulement 44 du pneumatique ne s'affaisse pas trop, tout en possédant une souplesse suffisante pour lui permettre de subir des déformations et d'être auto-nettoyant.

De façon caractéristique de l'invention, ce pneu est adapté pour permettre un roulage sur route. A cet effet, la bande de roulement 44 a sa partie en dôme aplatie, comme illustré en 52, de manière à accroître la surface de contact avec la chaussée. Cette partie 52 étant susceptible d'une usure plus rapide que dans le cadre d'un travail en champ, il est avantageusement prévu des épaulements 54 entre la surface 52 et le corps du pneumatique proprement dit. Cet épaulement permet en particulier de faire fonction de témoin d'usure de la bande de roulement, de manière que l'utilisateur puisse remplacer le pneumatique en temps utile.

En outre, 1a bande de roulement est avantageusement formée dans un matériau 56 différent de celui 58 du reste du pneu, avec des propriétés mécaniques permettant à la bande de roulement de mieux résister à l'abrasion sur revêtement routier, tout en conservant pour le corps du pneumatique une souplesse autorisant un travail en champ satisfaisant.

Sur les figures 3 et 4, on a représenté une variante dans laquelle, au lieu de disposer les pneumatiques 16 jointifs sur le tube 14, il est prévu un élément annulaire 60 ou 62 formant intercalaire pour ajuster le pas entre les pneus, et donc pour ajuster l'écart D entre deux sillons adjacents. L'utilisateur peut ainsi modifier l'écart entre sillons simplement en démontant les flasques d'extrémité, en retirant les pneumatiques du tube 14 et en réenfilant ces pneumatiques avec interposition d'éléments annulaires 60 ou 62 dont la largeur en direction axiale sera choisie selon l'écart D voulu pour les sillons.

Dans l'exemple illustré figure 3, l'intercalaire 60 est un intercalaire plein, de section rectangulaire, par exemple réalisé en un élastomère relativement dur, avantageusement armé d'un câble torsadé ou d'un jonc en métal ou en matière plastique.

Dans la variante illustrée figure 4, l'intercalaire 62 possède une cavité annulaire interne 64, reliée à l'atmosphère extérieure par un orifice 66, procurant à l'intercalaire 62 une souplesse accrue en direction axiale et autorisant ainsi une meilleure transmission des contraintes d'un pneumatique au pneumatique adjacent.

Les figures 5 à 7 illustrent d'autres modes de réalisation de l'invention, dans lesquels le rouleau est formé de deux parties 12, 12' coaxiales mais indépendantes en rotation. Cette configuration permet en particulier sur route une meilleure prise de virage du fait que les deux parties du rouleau pourront avoir des vitesses de rotation différente.

Chacune des deux parties de rouleau 12, 12' est constituée de la même manière que le rouleau unique 12 de la figure 1, c'est-à-dire que chacune comporte son propre tube 14, 14' pourvu de sa série de pneumatiques 16, avec un frein propre 28, 28'. Les deux parties de rouleau, 12, 12' sont symétriques par rapport au plan vertical P perpendiculaire au plan de la figure, qui est le plan médian de la machine.

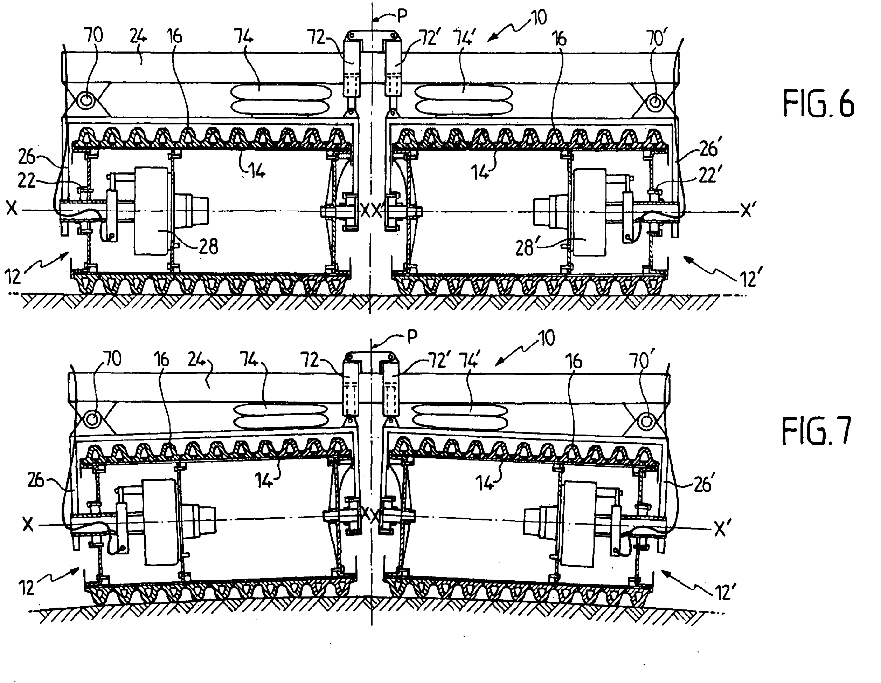

Les deux systèmes de freinage peuvent être placés face à face, c'est-à-dire de part et d'autre du plan médian P, comme illustré figure 5. En variante, comme illustré figures 6 et 7, les freins 28, 28' peuvent être disposés en opposition, c'est-à-dire aux extrémités les plus éloignées du rouleau.

Chaque frein 28, 28' comporte son actionneur associé 34, 34', les deux actionneurs étant mis en oeuvre simultanément par une commande commune 36.

Dans le mode de réalisation de l'invention illustré figures 6 et 7, le rouleau comprend également deux parties de rouleau 12, 12' munies chacune de son système de freinage associé 28, 28', les deux parties de rouleau étant indépendantes en rotation pour faciliter la prise de virage. Mais les deux parties de rouleau 12, 12' sont en outre articulées de manière à permettre un débattement de leurs axes respectifs XX et X'X' par rapport à une position coaxiale.

À cet effet, chaque montant d'extrémité 26, 26', au lieu d'être solidaires du bâti support 24, est relié à celui-ci par une articulation 70, 70' autorisant un débattement de l'axe XX (ou X'X') de la partie de rouleau 12 (ou 12') perpendiculairement à la direction de progression du rouleau, c'est-à-dire un débattement dans le plan de la figure. Cette possibilité de débattement, de préférence indépendamment pour chacune des deux parties de rouleau, permet à l'ensemble de s'adapter au profil de la route qui est souvent un profil bombé, comme illustré figure 7. Cette caractéristique assure une meilleure adhérence du rouleau à la route - et donc un meilleur freinage - et une répartition régulière de l'usure des pneumatiques.

Pour le travail en champ, on prévoit un système de blocage en position coaxiale (position illustrée figure 6), par exemple au moyen de vérins 72, 72' qui verrouillent les deux parties de rouleau 12, 12' dans cette position de travail.

En position de déplacement sur route, les vérins 72, 72' sont débloqués pour autoriser un libre débattement des deux parties de rouleau ; des amortisseurs 74, 74' sont avantageusement prévus entre le bâti support 24 et le support de la partie de rouleau 12, 12' dans la région opposée aux pivots 70, 70'.

Divers perfectionnements avantageux peuvent être apportés à l'invention. En particulier, dans le cas d'un rouleau en deux parties comme dans les modes de réalisation des figures 5 à 7, il se trouve qu'une bande de terre n'est pas travaillée entre les deux parties de rouleau 12, 12'. On peut alors prévoir au centre un petit rouleau additionnel (non représenté) placé soit devant soit derrière les parties de rouleau 12, 12' afin d'assurer un travail régulier du sol, sans solution de continuité entre les bandes de terre travaillées par chacune des parties de rouleau.

## Revendications

1. Machine agricole comportant un rouleau (10) et un bâti support tracté (24), ce rouleau comportant au moins un tube (12) monté à rotation autour d'un axe horizontal (XX) sur des paliers (22) reliés au bâti support, le tube étant pourvu d'une série de pneumatiques (16) enfilés sur ce tube et présentant des profils circonférentiels respectifs en dôme aptes à former dans la terre une série de sillons parallèles,
**caractérisée en ce qu**'elle comprend des moyens de freinage (28, 30, 32, 34) aptes à exercer de manière commandée un couple résistant entre le bâti support et le tube central.

2. Machine selon la revendication 1, **caractérisée en ce que** lesdits moyens de freinage sont logés à l'intérieur du tube.

3. Machine selon la revendication 1, **caractérisée en ce que** le tube (12) est fermé à chacune de ses extrémités par des flasques démontables (18) aptes à exercer un maintien et un serrage axial de la série de pneumatiques enfilés sur le tube.

4. Machine selon la revendication 3, **caractérisée en ce que** chaque flasque d'extrémité est solidaire du tube et **en ce que** ce flasque et le pneumatique qui lui est attenant comportent des moyens d'immobilisation en rotation relative.

5. Machine selon la revendication 1, **caractérisée en ce que** le rouleau comporte deux tubes (12, 12') coaxiaux horizontaux, montés chacun à rotation indépendamment de l'autre, et **en ce que** chaque tube est pourvu de moyens de freinage propres (28-34, 28'-34').

6. Machine selon la revendication 5, **caractérisée en ce que** les tubes sont montés sur un bâti support commun par l'intermédiaire de moyens articulés (70, 70') aptes à autoriser un désalignement des deux tubes par débattement angulaire entre le bâti et l'axe (XX, X'X') de chaque tube.

7. Machine selon la revendication 6, **caractérisée en ce qu**'elle comporte des moyens (72, 72') de blocage desdits moyens articulés, aptes à immobiliser de manière commandée les deux tubes dans une position d'alignement de leurs axes.

8. Machine selon la revendication 5, **caractérisée en ce qu'**elle comporte en outre un rouleau auxiliaire également pourvu de pneumatiques, et **en ce que** ce rouleau auxiliaire est disposé en avant ou en arrière dudit rouleau par rapport à la direction de traction de la machine, et centralement par rapport au bâti dans la région de l'intervalle entre les deux tubes.

9. Machine selon la revendication 1, **caractérisée en ce que** le tube porte des anneaux intercalaires (60, 62) enfilés sur le tube entre les pneumatiques (16), ces anneaux étant des anneaux amovibles définissant un intervalle donné séparant axialement les pneumatiques entre eux.

10. Machine selon la revendication 1, **caractérisée en ce que** chaque pneumatique comporte une bande de roulement circonférentielle (56) en forme de dôme aplati (52).

11. Machine selon la revendication 10, **caractérisée en ce que** la bande de roulement (56) est reliée au corps du pneumatique (58) par des épaulements latéraux (54) formant témoins d'usure.

12. Machine selon la revendication 10, **caractérisée en ce que** le matériau de la bande de roulement (56) et le matériau du corps du pneumatique (58) sont des matériaux présentant des propriétés mécaniques différentes.

## Claims

1. Agricultural machine comprising a roller (10) and a towed support frame (24), this roller comprising at least one tube (12) mounted to be rotatable about a horizontal axis (XX) on bearings (22) connected to the support frame, the tube being provided with a series of tyres (16) threaded onto this tube and having respective dome-shaped circumferential profiles, capable of forming a series of parallel furrows in the ground,
**characterised in that** it comprises braking means (28, 30, 32, 34) adapted to exert a resistant couple, in controlled manner, between the support frame and the central tube.

2. Machine according to claim 1, **characterised in that** the braking means are housed inside the tube.

3. Machine according to claim 1, **characterised in that** the tube (12) is closed at each of its ends by demountable cheeks (18) adapted to exert a holding force and provide axial clamping of the series of tyres threaded onto the tube.

4. Machine according to claim 3, **characterised in that** each end cheek is fixedly connected to the tube and **in that** this cheek and the tyre adjacent to it comprise immobilising means to prevent relative rotation.

5. Machine according to claim 1, **characterised in that** the roller comprises two horizontal coaxial tubes (12, 12'), each mounted to rotate independently of the other, and **in that** each tube is provided with its own braking means (28-34, 28'-34').

6. Machine according to claim 5, **characterised in that** the tubes are mounted on a common support frame via articulated means (70, 70') adapted to allow misalignment of the two tubes by angular displacement between the frame and the axis (XX, X'X') of each tube.

7. Machine according to claim 6, **characterised in that** it comprises means (72, 72') for locking said articulated means, capable of immobilising the two tubes, in controlled manner, in a position of alignment of their axes.

8. Machine according to claim 5, **characterised in that** it further comprises an auxiliary roller also provided with tyres, and **in that** this auxiliary roller is arranged in front of or behind said roller relative to the direction of towing of the machine, and centrally with respect to the frame in the region of the gap between the two tubes.

9. Machine according to claim 1, **characterised in that** the tube carries intercalary rings (60, 62) threaded onto the tube between the tyres (16), these rings being removable rings that define a given interval axially separating the tyres from one another.

10. Machine according to claim 1, **characterised in that** each tyre has a circumferential tread (56) in the form of a flattened dome (52).

11. Machine according to claim 10, **characterised in that** the tread (56) is connected to the body of the tyre (58) by lateral shoulders (54) forming wear indicators.

12. Machine according to claim 10, **characterised in that** the material of the tread (56) and the material of the body of the tyre (58) are materials that have different mechanical properties.

## Patentansprüche

1. Landwirtschaftliche Maschine mit einer Walze (10) und einem gezogenen Gestell (24), wobei die Walze wenigstens ein Rohr (12) aufweist, das drehbar um eine horizontale Achse (XX) auf Lagern (22) angebracht ist, die mit dem Gestell verbunden sind, wobei das Rohr mit einer Reihe von Reifen (16) versehen ist, die auf das Rohr aufgereiht sind und jeweils Umfangsprofile in Domform aufweisen, die in der Lage sind, in der Erde eine Reihe von parallelen Furchen zu bilden,
**dadurch gekennzeichnet,**
**dass** sie Bremsmittel (28, 30, 32, 34) aufweist, die in der Lage sind auf gesteuerte Weise ein Widerstandsmoment zwischen dem Gestell und dem Mittenrohr auszuüben.

2. Maschine nach Anspruch 1, **dadurch gekennzeichnet, dass** die Bremsmittel im inneren des Rohres angeordnet sind.

3. Maschine nach Anspruch 1, **dadurch gekennzeichnet, dass** das Rohr (12) an einem jeden seiner Enden durch entfernbare Flansche (18) geschlossen ist, die in der Lage sind, ein Halten und ein axiales Klemmen der auf dem Rohr aufgereihten Reifenreihe auszuüben.

4. Maschine nach Anspruch 3, **dadurch gekennzeichnet, dass** jeder Endflansch mit dem Rohr verbunden ist, und dass dieser Flansch und der ihm zugeordnete Reifen aufeinander bezogene Drehblockierungseinrichtungen aufweist.

5. Maschine nach Anspruch 1, **dadurch gekennzeichnet, dass** die Walze zwei koaxiale, horizontale Rohre (12, 12') aufweist, die jeweils drehunabhängig von dem anderen montiert sind, und dass jedes Rohr mit eigenen Bremseinrichtungen (28-34, 28'-34') versehen ist.

6. Maschine nach Anspruch 5, **dadurch gekennzeichnet, dass** die Rohre an einem gemeinsamen Gestell mittels Gelenkeinrichtungen (70, 70') angebracht sind, die in der Lage sind, eine Winkelverschiebung der beiden Rohre zwischen dem Gestell und der Achse (XX, X'X') eines jeden Rohres zu erlauben.

7. Maschine nach Anspruch 6, **dadurch gekennzeichnet, dass** sie Blockiereinrichtungen (72, 72') der Gelenkeinrichtungen aufweist, die in der Lage sind, auf gesteuerte Weise die beiden Rohre in einer Ausrichtposition ihrer Achsen festzulegen.

8. Maschine nach Anspruch 5, **dadurch gekennzeichnet, dass** sie darüber hinaus eine Hilfswalze aufweist, die ebenfalls mit Reifen versehen ist, und dass diese Hilfswalze vor oder nach der Walze bezüglich der Ziehrichtung der Maschine und zentral bezüglich des Gestells im Zwischenbereich zwischen den beiden Rohren angeordnet ist.

9. Maschine nach Anspruch 1, **dadurch gekennzeichnet, dass** das Rohr Zwischensetzringe (60, 62) aufweist, die auf dem Rohr zwischen den Reifen (16) aufgereiht sind, wobei diese Ringe bewegliche Ringe sind, die einen vorgegebenen Zwischenraum definieren, der axial die Reifen untereinander beabstandet.

10. Maschine nach Anspruch 1, **dadurch gekennzeichnet, dass** ein jeder Reifen eine Umfangsrollfläche (56) in Form eines abgeflachten Domes (52) aufweist.

11. Maschine nach Anspruch 10, **dadurch gekennzeichnet, dass** die Rollfläche (56) mit dem Körper (58) durch seitliche Schultern (54) verbunden ist, die Abnutzungsanzeigen bilden.

12. Maschine nach Anspruch 10, **dadurch gekennzeichnet, dass** das Material der Rollflächen (56) und das Material des Reifenkörpers (58) Materialien sind, die unterschiedliche mechanische Eigenschaften aufweisen.
